# EUROPEAN PATENT SPECIFICATION

(11) **EP 1 079 639 B1**
(45) Date of publication and mention of the grant of the patent: **04.05.2011**
(21) Application number: 00650117.5
(22) Date of filing: 28.08.2000
(51) Int. Cl.: H04Q 3/00, H04M 3/36

(54) **A method for controlling mass calls, and a corresponding communications network**
Verfahren zur Steuerung von Massenanrufen, und entsprechendes Kommunikationsnetz
Procédé pour contrôler des appels de masse, et réseau de communication correspondant

(30) Priority: 26.08.1999 EP 99650075
(43) Date of publication of application: 28.02.2001
(73) Proprietor: Telefonaktiebolaget L M Ericsson, 164 83 Stockholm (SE)
(72) Inventor: Vaughan, Patrick Joseph, County Clare (IE)
(74) Representative: Mohsler, Gabriele

(56) References cited:
- EP-A- 0 426 355
- EP-A- 0 687 116
- DE-A- 4 413 960
- DE-A- 19 527 759
- US-A- 5 450 483
- WILLIAMS P M: "A NOVEL AUTOMATIC CALL RESTRICTION SCHEME FOR CONTROL OF FOCUSED OVERLOADS" IEE ELEVENTH UK TELETRAFFIC SYMPOSIUM. PERFORMANCE ENGINEERING IN TELECOMMUNICATIONS NETWORKS, CAMBRIDGE, UK, 23 - 25 March 1994, pages 27/1-27/10, XP002154937

## Description

### Introduction

### Technical Field of the Invention

The invention relates to a method of controlling the number of calls transmitted by an originating exchange to a terminating exchange in a communications network when the network is subjected to random recurring call events which lead to unacceptable levels of ineffective traffic, the network having a plurality of subscribers each having a unique subscriber identity and each being part of one of a plurality of demand areas. It also relates to a network and a controls system for the network.

Essentially a network has a plurality of pieces of subscriber equipment which can be anything from a single telephone belonging to one subscriber to a commercial organisations telephone system. Such equipment has a unique identity and acts as either a subscriber when it is the recipient of calls and as a supply entity when it is the source of the call. Such subscriber equipment is first connected to its local exchange and then in the network often through transit exchanges to a terminating exchange which services another piece of subscriber equipment belonging to another subscriber. Often with local calls, the local exchange acts as both the originating and terminating exchange. Thus, while in this specification, the originating and terminating exchanges are referred to, it must be appreciated that they can be the one and the same piece of equipment.

Further, the term "exchange" has been used throughout this specification, it being appreciated that in some jurisdictions, the term "exchange" or indeed the term "node" is often used. The term "subscriber" is used rather than "piece of subscriber equipment" or "subscriber equipment". Finally, "demand area" is analogous to the ITU-T definition of "destination" as described in ITU-T E 410 (10/96).

### Description of Related Art

Traffic management is becoming increasingly a problem for communications in public and data networks in both public switching, for example, asynchronous transfer mode (ATM) and internet protocol (IP) technologies or any other switching protocol. Stimulated unannounced mass calling events arise particularly in certain known subscribers, for example a radio station running a competition in which listeners must reply to a particular promotion, quiz or indeed simply to give their opinions in relation to a particular programme taking place. Other situations where they may occur for example is with a public utility during some natural disaster, or indeed for example to a whole country where an earthquake or the like disaster has occurred. The problem with these events is that they are normally characterised by very large volumes of calls that are concentrated in relatively short time intervals. This is particularly the case, for example, with the calling of radio stations where the calls tend to take place during commercial breaks in response to advertisements. This can lead to focussed overload in the network whereby the experienced traffic volumes destined for the identified destinations greatly exceed the engineered traffic capabilities for the exchanges of those destinations.

Another mass calling event that can cause problems is the downloading of information for example from lottery or gaming machine terminals to a master host where the mass calling occurs usually in the hour before the lottery draw, the horse race or other sporting event takes place. It can be said to be predictable for some such events, but is not entirely predictable.

It is vitally important to control the affects of such stimulated events on the network, while maintaining network occupancy to the engineered level.

At the present moment the current method of controlling mass calling situations involves the use of network intelligence solutions whereby the subscriber is known in advance and traffic calming procedures are implemented to limit the amount of traffic which is allowed to proceed to the previously identified subscriber. Unfortunately, there are many situations where mass calling events are not known in advance and the network is vulnerable to the consequences of mass calling. The problem is that the solutions available are generally reactive and only apply traffic calming after the mass calling event has affected the network operation.

The problem is in many situations the mass calling event is not known in advance and thus will hit a totally unprotected network and render the network in a state whereby the engineered traffic calming capacity is overwhelmed with traffic to a single destination or indeed to a set of destinations. It is almost impossible to successfully terminate calls to the particular subscriber causing general overload on the network. This can have severe financial implications for the network operator because there can be rapidly spreading network congestion, most notably at the transit network level which is usually high revenue generating traffic.

U.S. Patent No. 5,295,183 (Northern Telecom Limited) discloses a congestion control system. The control system receives an indication from the terminating exchange that a number appears to be congested, then works backwards through the analysis to find which number should be restricted from the originating exchange. However, there are difficulties in working backwards through the analysis of a network because it is difficult to find which number should be restricted within the originating exchange and is dependent on the routing structure. Also this control system has to monitor all the subscribers to the network at any time in order to control unannounced mass calls which is computationally very wasteful on the network resources. The monitoring of the network is based on statistical calculations. This leads to the problem that real-time control of the network is hard to attain because in order to provide smooth and accurate control the cycle time is reduced the result being that the statistical calculations become less accurate. This congestion control system can only be considered as an enhancement of a dynamic call routing system, and as such can only be considered in association with one particular implementation of traffic routing in a telecommunications network.

As well as being an ineffective use of network resources, the service level to the customer is severely limited. Thus, one or more subscriber having a traffic overload can cause difficulties for all the other subscribers being serviced by a particular network, which other subscribers would be capable of accepting calls or making them.

DE 195 27 759 which is regarded as the closest piece of prior art in this case discloses a method for controlling mass calls wherein the identification of a mass calling event to a subscriber is signalled to other exchanges in the telecommunications network, which then reduce or eliminate traffic having that subscriber as a destination.

### Summary

According to the invention, there is provided a method of controlling the number of calls transmitted by an originating exchange to a terminating exchange in a communications network when the network is subjected to randomly recurring call events which lead to unacceptable levels of ineffective traffic, the network having a plurality of subscribers, each having a unique subscriber identity and each being part of one of a plurality of demand areas comprising:
monitoring the level of ineffective traffic for each demand area;
comparing the level of ineffective traffic for a demand area against a preset demand area limit;
monitoring each subscriber within the demand area when the preset demand area limit is exceeded;
identifying any subscriber within the demand area whose level of ineffective traffic exceeds a preset subscriber limit for that specific subscriber;
initiating a traffic control response for each subscriber within the demand area whose level of ineffective traffic exceeds a preset subscriber limit; and
continuing the traffic control response until the level of ineffective traffic to that subscriber drops below its preset subscriber limit.

Ideally, the preset demand area limit may be set as a percentage of the total traffic towards the demand area as may the preset subscriber limit. Either limits may be set as a number of ineffective calls over a unit of time.

It is possible to ensure that at least one demand area is exempted from traffic control as also may one subscriber.

Further, the invention provides a method in which:-
the monitor for each subscriber is carried out at the terminating exchange as is the traffic control response;
the intervening preceding transit exchange recognises the rejected call as an ineffective call; and
the originating exchange recognises the rejected calls at the transit exchange and the originating exchange carries out the traffic control response.

In another method according to the invention, when the calls are transmitted through a transit exchange to the terminating exchange for the demand area the method comprises on the level of ineffective traffic for the demand area exceeding the preset demand area limit:-
the transit exchange originating the monitor for each subscriber within the demand area as if the transit exchange were the originating exchange;
the transit exchange originating the traffic control response on the specific subscriber as required;
the originating exchange sensing the traffic control response of the transit exchange;
the originating exchange causing the traffic control response for the specific subscriber to commence on itself; and
the transit exchange ceasing to cause a traffic control response on the level of ineffective traffic at the transit exchange reducing below the preset demand area limit.

In this latter method, when the calls are are transmitted through a plurality of transit exchanges the transit exchange directly connected to the terminating exchange first carries out the traffic control response which is sensed by the next transit exchange until finally the originating exchange starts the traffic control response and indeed when the calls are transmitted through a plurality of transit exchanges to the terminating exchange, any transit exchange which is not adapted to carry out the method is ignored and the transit exchange nearest to the terminating exchange senses the situation at the terminating exchange and this in turn is sensed by the originating exchange to start the traffic control response. Similarly, if the terminating switch is not adapted to carry out the method, the method is carried out as if the terminating exchange did not exist, the next preceding exchange carrying out the method according to the invention.

In one method according to the invention, at least two demand areas are combined together to form an overall demand area and a preset overall demand area limit is set which limit is less than the aggregate of the limits for each individual demand area.

It is also envisaged that the traffic control response may be cancelled at the originating exchange.

Preferably, each originating exchange downloads a report detailing each traffic control response to a separate management unit.

In one method according to the invention, various exchanges in the network are allocated different preset demand area limits for the one demand area whereby the monitoring of the level of ineffective traffic for a demand area will initially occur at the exchange having the lower preset demand area limit allocated thereto. Indeed, they may be allocated the same preset demand.

Further, there is provided a communications network comprising:
an originating exchange;
a terminating exchange;
a plurality of subscribers connected to the exchanges:
   a plurality of demand areas including some of the subscribers;
   means for measuring the ineffective traffic to a demand area;
   means for determining if the ineffective traffic to a demand area
   exceeds a preset demand area limit;
   means for monitoring each subscriber within the demand area which exceeds the preset demand area limit;
   means for identifying the particular subscriber within the demand area
   whose level of ineffective traffic exceeds a preset subscriber limit;
   means for causing the originating exchange to perform traffic control on the particular subscriber; and
   means for continuing the traffic control response until the level of ineffective traffic to that subscriber drops below its preset subscriber limit.

Preferably, the communications network comprises a transit exchange which includes means for recognising that there is a number of ineffective calls.

### Brief Description of the Drawings

The invention will be more clearly understood from the following description of an embodiment thereof, given by way of example only with reference to the accompanying drawings in which:
Fig. 1 is a schematic of a telephone exchange network;
Figs. 2 and 3 are flow charts of the method of controlling randomly occurring call events in a communications network according to the present invention;
Fig. 4 illustrates the operation of the invention between remotely located exchanges; and
Fig. 5 is a real time block diagram layer of an exchange node according to the present invention.

### Detailed Description

It will be appreciated that for this specification that ineffective traffic is defined as any call that is not connected, however, an aspect of the present invention is that ineffective traffic can be divided into subsets so that a traffic control response and hence traffic calming is not initiated for every subset, for example, ring tone no reply, terminal not responding, etc. are subsets that might not need traffic calming to be implemented. The traffic calming might be for a particular subscriber, initiated when there was more than one call per 10 seconds being classified as a call failure. Then as the network operates each subscriber has its ineffective calls monitored so as to determine the subscriber of each ineffective call and these are compared with the level of ineffective calls for each subscriber to its control initiation limit. When the control initiation limit is exceeded, traffic calming or control is performed towards a subscriber. There is progressively more traffic control until the level of ineffective calls falls below the initiation level.

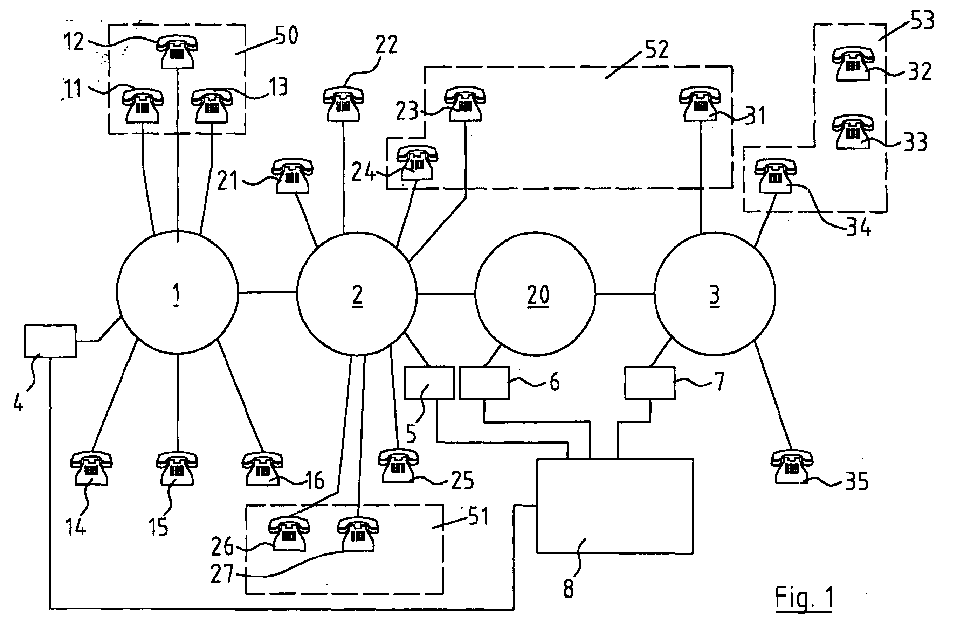

Referring to the drawings and initially to Fig. 1, there is illustrated portion of the communications network in which an originating exchange 1 is connected to various telephones or subscribers each having a subscriber identity and identified by the reference numerals 11 to 16. Three of the subscribers, namely subscribers 11, 12 and 13 are part of a specific demand area 50 which is identified or defined by a specific telephone area code, or simply by a group of numbers connected to that exchange 1. In other words all the subscribers 11 to 16 could be within the one area code in the sense for example they would all relate to the one town, which could be accessed from other subscribers outside that town, by the addition of some area code, but that particular originating exchange 1 could for example handle all seven digit numbers commencing with the feed in digits 73, 74 and 75 and thus the three telephones within the demand area 50 would all have leading digits 73 which therefore would distinguish that group of subscribers from all the other subscribers handled directly by that originating exchange 1. The originating exchange 1 is directly connected to a transit exchange 2 which in turn is directly connected to subscribers identified by the reference numerals 21 to 27. The subscribers 26 and 27 form another demand area 51, while the subscribers 23 and 24 form part of a further demand area 52 which also has in it a subscriber of a terminating exchange 3 as will now be described. The transit exchange 2 is connected to the terminating exchange 3 through a further transit exchange 20 which is not connected directly to any subscribers. In practice, the transit exchange 20 would be connected to other exchanges, however, for simplicity, this is not shown nor are all the other exchanges forming part of the network. The terminating exchange 3 in turn has connected to it, various subscribers identified by the reference numerals 31 to 35. The subscriber 31 forms part of the demand area 52 while the subscribers 32, 33 and 34 form part of a demand area 53. For example, when the originating exchange 1 receives a call from the subscriber 10 now operating as a supply entity for the subscriber 12 forming part of the demand area 50, all the method according to the present invention is carried out within the originating exchange 1 which also acts as the terminating exchange. However, for example, when the subscriber 11 wishes to be connected to for example the subscriber 32 then the call is transferred from the originating exchange 1 through the transit exchanges 2 and 20 and terminating exchange 3 to the subscriber 32 within the demand area 53. Suitable control equipment identified by the reference numerals 4, 5, 6 and 7 is connected to each exchange 1, 2, 20 and 3 respectively. A central controller 8 is also provided. Such a central controller is not required if de-centralised control is used with all the control being carried out by the control equipment 4 to 7 inclusive.

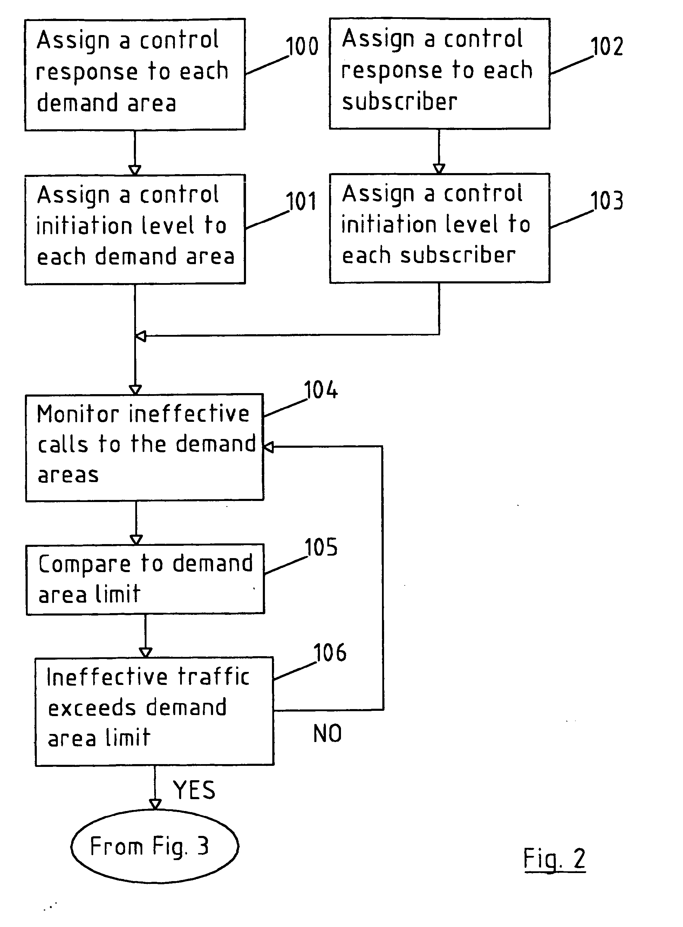

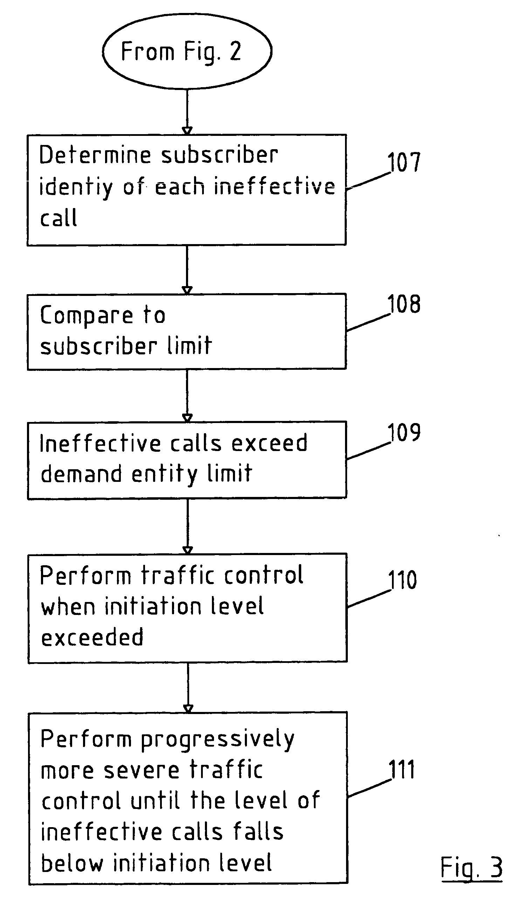

Referring now specifically to Figs. 2 and 3 there will initially, in step 100, have been assigned to each of the demand areas 50 to 53 a control response, namely what is to be done in relation to traffic calming for that particular demand area, when the level of ineffective traffic for the demand area exceeds some preset limit. In step 101 there is assigned a control initiation level to each demand area, in other words a preset demand area limit for ineffective calls. In step 102 a control response for each subscriber will be assigned for situations when the level of ineffective traffic for that subscriber exceeds some preset subscriber limit. Generally speaking such traffic calming or traffic control responses will be any suitable well known system, usually which operates in some progressive manner until the level of ineffective calls falls below the level which the traffic control was first initiated. In step 103 a suitable control initiation level is set, i.e. that level within which the traffic control response will be initiated when the level of ineffective traffic for the specific subscriber exceeds a preset subscriber limit. All of these steps are obviously carried out during the set of the system and may be changed during set-up the operation of the system.

Dealing now with the simplest situation i.e. when for example all the traffic is taking place within and through the exchange 1 i.e. in which there is no traffic coming to the exchange 1 from other transit exchanges, obviously a situation that would never arise, but one that should be considered because it simplifies the understanding of the invention. The unannounced mass calling could be caused by a local number. Other calls within the local network, whether local or from outside the network, are effected by this and therefore, it is essential to resolve it. For the network operator, there is a serious loss of revenue and for the consumer, a loss of service. Presuming therefore that subscriber 12 within the demand area 50 is the phone number of a local radio station that has just announced a phone in. There will be an immediate increase in the number of ineffective traffic for the demand area 50 and in step 104 this will be noted as monitoring is carried out and in step 105 it will be checked whether the ineffective traffic exceeds that for the demand area limit and in step 106, a decision is made depending on the answer and if it does not exceed the limit then step 104 will continue to be carried out, namely the comparison and monitoring of the ineffective traffic to the demand area 50. If, however, it does exceed the demand area limit, then in step 107 there will be determined the identity of each ineffective call within that demand area 50. Then in step 108 these ineffective calls will be compared to the subscriber limit for each of the subscribers 11, 12 and 13 and in step 109, the subscriber 12 will be identified as the subscriber exceeding its preset subscriber limit.

When in step 109 it is noted that the ineffective calls to the subscriber 12 exceeds the subscriber limit then in step 110 traffic control is carried out on the subscriber 12 as the initiation level has been exceeded. In step 111 the traffic control is progressively performed until the level of ineffective calls falls below the initiation level for that particular subscriber which presumably will then bring the total level of ineffective calls for the demand area below its demand area limit.

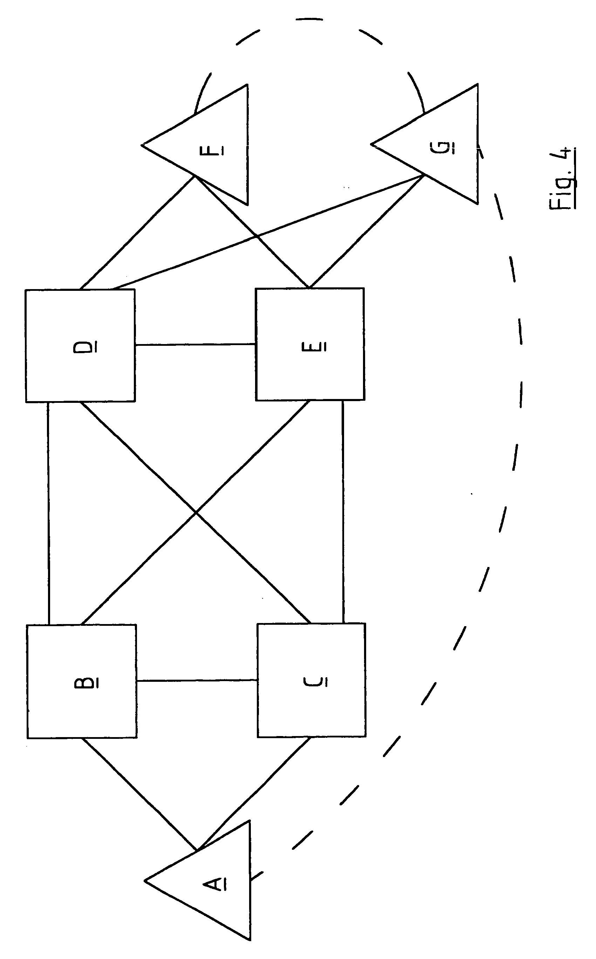

This is the simplest situation, i.e. where originating and terminating exchanges are one and the same exchange. In practice, the subscriber will be connected to a distant terminating exchange through transit exchanges as shown in Fig. 1. This is described below with reference to Fig. 4.

Referring now to Fig. 4, there is illustrated three local exchanges, A, F and G. In this particular example of traffic, the exchanges A and F are originating exchanges and the exchange G is a terminating exchange. While exchanges B, C, D and E are transit exchanges. As is common each local exchange will be connected to at least two transit exchanges. Thus, for example, the originating exchange F is connected to the transit exchanges D and E as is the terminating exchange G. The exchanges are connected to the following area codes:

| **Exchange** | **Type** | **Demand Area** **Area Code** |
|---|---|---|
| A | Originating | 0148 |
| | | 0144 |
| F | Originating | 01902 |
| | | 01903 |
| G | Terminating | 0178 |
| | | 0179 |

The local exchange A wishes to send traffic to the number 0178235467 serviced by exchange G as is also the other local exchange F. In Fig. 4, connections between exchanges are by full lines and traffic flow between exchange is shown by arrows and interrupted lines. There may be other exchanges attempting to send calls to the particular demand area 0178 and there are indeed calls being sent to it. However, for simplicity they are not shown. In operation, both exchange A and exchange F are sending calls to the local exchange G. The local exchange G experiences an overload. It may for example be caused as explained already by a national radio station announcing a phone-in to phone number 0178235467. The overload is firstly on the area 0178. The exchange G carries out the method and immediately starts to introduce the necessary traffic calming or traffic control once it pinpoints the particular number or numbers, in this case the number 0178235467. This will hopefully reduce the area overload immediately on the local exchange G i.e. on the terminating exchange. Effectively moving back along the line, the transit exchange, C will experience a problem in relation to the demand area 0178 being experienced on its calls being transmitted to the exchange E. It will in turn carry out the necessary traffic control on the particular number 0178235467. It will then in turn start rejecting calls from the originating exchange A which will now start experiencing a large number ineffective calls which will cause it to institute the necessary traffic control on the individual number. Thus, calls from the originating exchange, A will no longer now be transmitted throughout the network and the traffic control or traffic calming will be taking place in the local exchange A, that is to say in the originating exchange. When this happens it will be appreciated that the transit exchanges C and E may terminate the necessary traffic calming or traffic control and thus the exchange A will be the only exchange i.e. the local originating exchange that will be operating traffic calming. In substantially the same way calls coming from local exchange F which in this is an originating exchange to the terminating exchange G will be routed through the transit exchange E and in this case, the transit exchange E will carry out exactly the same operation with respect to the local originating exchange F as was carried out with the local originating exchange A.

Referring again to Fig. 1, the originating exchange is exchange 1, exchange 2 and 20 are the transit exchanges and exchange 3 is a terminating exchange and some or more of the subscribers 11 to 16 wish to be connected to the subscriber 33 in the demand area 53. Then it will be seen how the invention operates. The terminating exchange 3 will sense that the level of ineffective traffic to the demand area 53 exceeds a preset demand area limit and will then discover that the subscriber 33 is the cause of the problem and will then initiate a traffic control response, because the level of ineffective traffic to the subscriber i.e. the number 0178235467 exceeds the preset subscriber limit. The transit exchange 2 will have sensed the number of calls being rejected by the terminating exchange 3 and will have noted that they are for the subscriber 33 and therefore it will in turn conduct the traffic control response for this subscriber 33. That again will be sensed by the originating exchange 1, which will then initiate the same level of traffic control response for the subscriber 33 which traffic control response will be exerted on the subscribers 11 to 16 for which the originating exchange is the local exchange. Once the originating exchange 1 has initiated the necessary traffic control on the subscriber 33, the terminating exchange 3 and the transit exchange 2 will no longer be experiencing any traffic overload and therefore they will terminate all traffic control procedures. Thus the ineffective traffic will not be transmitted through the network.

The traffic control event is carried out in real-time.

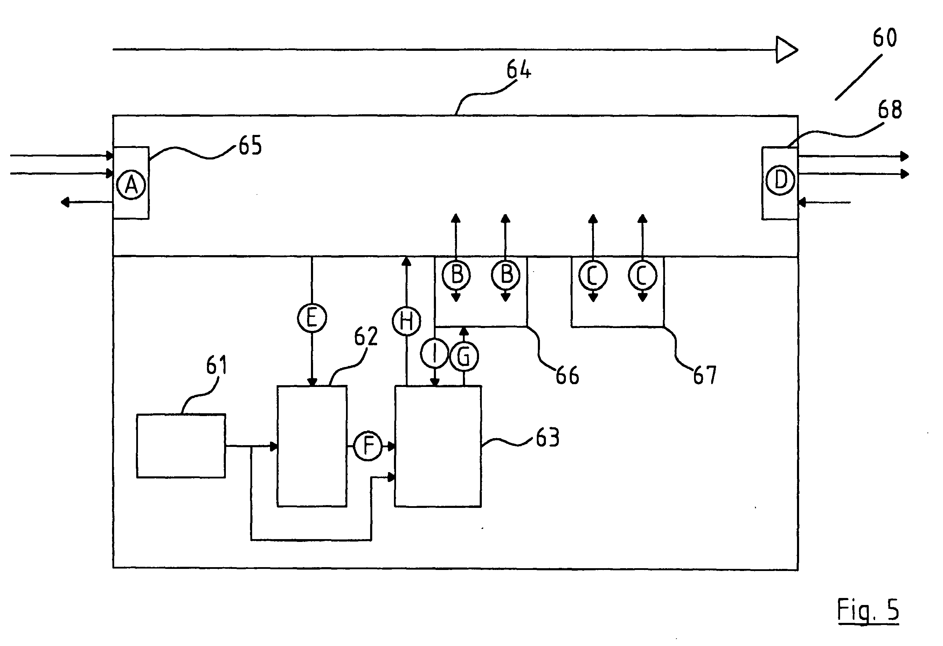

Referring to Fig. 5, there is illustrated an exchanging node indicated generally by the reference numeral 60. A parametric data module 61 defines the threshold data for each subscriber and inputs this information to a Dynamic Destination Overload Control DDOC monitor module 62 and a control module 63. A set-up logic controller 64 receives incoming events via an input interface 65. An event may be a voice call, data transmission or any type of telecommunication traffic. The set-up logic controller 64 is interfaced with a number analysis module 66, a routing analysis module 67 and an output interface module 68. These modules 66, 67 and 68 detect the number of call failures that will or might happen to individual destination entities downstream in the network. The DDOC monitor module 62 monitors the number of call or possible call failures. When the number of call failures reaches a certain level for a particular subscriber, the DDOC control module 63 is triggered to implement a control response that is broadcast locally or broadcast over the whole network. The circled letters in Fig. 5 identify the operations listed below.
A. Incoming access receives new calls/events.
B. Call/event setup logic interfaces to number analysis module. A possible result is failure, as well as other information to further process the call/event.
C. For outgoing events, routing analysis may take place. A possible result is failure.
D. Call/event is forwarded to outgoing access or terminating address. A possible result is failure, e.g. from the network or terminating access.
E. DDOC monitors call failures (excluding failures generated by DDOC control locally in exchanging centre).
F. DDOC generates an event when levels of call failure are unacceptable (determined by parametric data).
G. Trigger detection point inserted to number analysis for DDOC control local to DDOC monitoring (de-centralised DDOC).
H. DDOC event passed to call control setup logic for broadcast to the network (centralised DDOC). Instantiating trigger detection points throughout the network.
I. As a result of A and B, the DDOC trigger detection point activates an instance of DDOC control, resulting in traffic calming.

On receipt of additional call failures for a particular subscriber exceeding the user defined limit, a progressively more severe control response is applied until a level is attained where the system is managing the traffic flow at an acceptable level. This can be as in the embodiment described above carried out at a local level and if necessary can be transmitted to central networks to prevent, for example, incoming trunk calls to a particular network. The particular control event will depend entirely on the control that has been set for the particular subscriber.

The DDOC monitoring information can be stored in a database. Activity in the network such as when the ineffective traffic reaches a certain level can be recorded as event data. This event data can be used by other applications for example fault and management applications in the network. This is particularly advantageous for service providers who can use this data to improve the service level to their customers.

The level of ineffective traffic can be set as a percentage of the total traffic towards a particular demand area. Generally speaking the preset demand area limit will be set at a higher level of ineffective calls than the preset subscriber limit for any subscriber within that demand area. Similarly the preset subscriber limit can be set as a percentage of the total traffic to the subscriber, or alternatively the level of ineffective traffic to both the demand area and any specific subscriber can be set as a number of ineffective calls over a particular unit of time, such as five calls per second and so on.

It is preferable that in certain circumstances at least one demand area is exempted from traffic control. For example, if a particular demand area has a series of numbers all relating to the police force or other emergency services, then it might be inappropriate to exercise any traffic control whatsoever on this particular area and similarly this could arise for any particular subscriber within a particular demand area.

It will be appreciated from the above that the affect on transit exchanges is relatively minor in the sense that once the terminating exchange senses a problem that the traffic calming or traffic control is cascaded back to the originating exchange and then effectively the terminating exchange and the intermediate transit exchanges experience no problems in relation to calls from that particular originating exchange.

In a practical management system using the present invention effectively the monitor of the demand area is essentially a high level monitor and the monitor of the individual subscribers is a low level monitor. In one practical embodiment, the high level monitor is set up for various area codes within the network and a leaky bucket overflow is used. Essentially the call failures overflowing from the high level monitor are interrogated for the B-number involved, namely, the unique subscriber identity and a low level monitor is created for that B-number which in turn leads to traffic control.

In one practical embodiment up to 32 low level monitors can automatically be started for each high level monitor. Essentially the low level monitor parameters are defined so that when a problem B-number is identified a leaky bucket is set up automatically. As mentioned bucket size flow through rate and hysteresis to prevent toggling of the control are preferably provided. Also a timer is provided to control the frequency with which the monitor functions can inform the restriction function of the continuing overload.

It will be appreciated that the monitoring must continue as the traffic calming is taking place. For example, initially a percentage restriction could be supplied to a B-number for example in steps of 5% to 50% and over a period of time for example 2 to 120 seconds. It is important to do this because the rate at which the decrease of the restriction is achieved when the overload is reducing must be controlled. Thus, for example, one could have a situation where the restriction might be as follows:
Time T1 initial restriction 10% (This is obviously configurable)
Time T2 increased to 19%
Time T3 increased to 27%
Time T4 increased to 34%
Time T5 increased to 41 %
Time T6 increased to 47%
Time T7 increased to 54%
Time T8 decreased to 47%
Time T9 decreased to 41 %
Time T10 decreased to 34%
Time T11 decreased to 27%
Time T12 decreased to 19%
Time T13 decreased to 10%
Time T14 remove restriction.

Obviously the time when the maximum overload notifications which increase the restriction to 54% will stay in place until the overload is no longer occurring is variable thus with massive overload the time between T7 and T8 could be many minutes.

It is envisaged that various management reports and information may be provided such as, for example, an immediate print-out when any traffic control restriction is applied for the first time with information on subscriber identity or demand area identity. Further, it will be possible to then obtain statistics on the affect of such restrictions with the start of the restriction and the number of calls affected by such restriction. Further, it is easy to gather the number of calls affected by a restriction towards each destination. Additionally, it is envisaged that the number of calls affected by restrictions on traffic type basis whether it be incoming, outgoing, transit or originating can be relatively easily obtained.

In summary a suitable control response abatement mechanism will be provided and, for example, may be determined by a timer mechanism. Thus, if no control event is received within the specified time interval greater than or equal to the limit the control response will abate by an amount that is equivalent to the parametric data entered initially for the called address domain.

It is envisaged that the monitor for each subscriber is initially carried out at the terminating exchange as is the traffic control response, the intervening preceding transit exchanges recognising the rejected calls. The originating exchange recognises the calls at the transit exchange and the originating exchange carries out the traffic control response. Needless to say if, for example, the method cannot be carried out at the transit exchange, then the method is carried out as if the transit exchange did not exist. If, however, for example, the terminating exchange was not adapted to carry out the method then the method is carried out as if the terminating exchange did not exist, the next preceding exchange carrying out the method according to the invention.

In some situations the traffic control response can be cancelled at the originating exchange. A situation could arise where it was decided that for good management this should happen. Similarly, it is envisaged that various exchanges in the network can be allocated different preset demand area limits for the one demand area. Alternatively, all the exchanges can be given the same preset demand area limit for the one demand area, or indeed there can be different demand area limits for different demand areas. It will be appreciated that this can affect the manner in which the exchanges handle the invention. For example, if the terminating exchange has a higher demand area limit than a transit exchange, then the transit exchange will proceed to carry out the method according to the invention before the terminating exchange. The same would similarly apply to the originating exchange.

It is also envisaged that the invention can supply a communications network comprising effectively all the exchanges with the method according to the present invention programmed therein or carried out by other means.

Initially each exchange is configured with a measure of the accepted level of ineffective traffic for each particular subscriber. For example, as explained above the measure of the accepted level of ineffective traffic may be expressed as a leaky bucket. The data may include thresholds and hysteresis qualifiers, event generation timers, call failure selectivity qualifiers and so on. Additionally the controller may be programmed so as to initiate traffic calming when the overall level of traffic to the exchanging node exceeds the predetermined level, in other words the traffic calming can be carried out not just simply on the subscribers, but also on the exchange 1 itself or on a specified demand area.

It is important to appreciate that with this invention is not necessary to know the identity in advance of, for example, any of the subscribers, but simply to initiate the traffic calming procedures when one or other of the subscribers is quite clearly getting an unacceptable level of ineffective calls. The traffic calming or controlled response may include any of existing and known control responses, for example, percentage restriction may be specified in terms of simultaneous traffic capacity, initial levels of control response as mentioned above can be expressed as well as control increase levels, control abatement levels, timer for control abatement and so on.

In operation on an unannounced mass calling event in the network, the monitoring of the ineffective calling as mentioned above is performed automatically by simply sensing the number of call failures in the network and comparing them to the predefined parametric threshold data of the subscriber.

The manner of traffic control is to a large extent optional. Generally speaking the control event may be transmitted by the exchange to the other exchanges in the network and upwards so as to ensure that the traffic calming is initiated throughout the network. Alternatively, traffic calming may be initiated locally.

Parametric data for control response may be defined towards particular destinations or groups of subscribers in a particular destination domain. The control response parametric data may include any of existing or known control responses, for example, percentage restriction. A feature of the present invention is that the control response may be based on a measure of simultaneous traffic capacity. Simultaneous traffic capacity is measured in Erlangs and specifies the simultaneous number of calls that are allowed towards the subscriber identity. Initial levels of control response may be expressed as well as control increase levels, control abatement levers and timers for control abatement. As has been indicated above it is desirable in certain circumstances to specifically exclude certain subscribers and thus the subscriber identity from the controlled response thus ensuring compliance with services agreements and for priority subscribers.

The system is configured by specifying general high-level demand identities for example geographical areas or groups of dial-up services that are prone to receiving a large number of calls at any one time. For each high-level subscriber identity, the user shall specify the acceptable call failure rate, and a specification of the restriction type that should be implemented in case of a problem being detected.

In use, when an unannounced mass calling occurs in a network the monitoring of ineffective calling is carried out automatically once the presence of call failures is detected directed first towards the high level demand identities in the network. In most situations the determination of a particular subscriber and thus its identity is only triggered when the unacceptable level of ineffective calling exists. This will be measured for example by a leaky bucket mechanism. Thus once the leaky bucket that is to say the number of ineffective calls is full or in effect when the number of ineffective calls exceeds the user specified limit for that subscriber, this will initiate an in-depth analysis of call failure. Immediately the subsequent call failures are identified, identifying the demand identities and thus locating the specific demand identities. For each call failure to a high-level subscriber identity, where the high-level subscriber identity is marked as problematic, the system shall automatically create a monitored object which relates to the address of the low-level subscriber identity, the dialed number, if such a monitored object does not already exist. The system shall calculate the call failure rate towards this monitored object again for example by a leaky bucket algorithm. If the call failure rate towards a monitored object is unacceptable, the system shall signal to a restriction module which initiates traffic calming towards the monitored object.

It is appreciated that the present invention may be carried out in a centralised or decentralised solution.

Further, it will be appreciated that the invention may be carried out by any suitable computer readable medium having a plurality of instruction codes such as have been suggested already. Further, various processors, etc. may be used and indeed most exchanges are provided already with some form of computer operated devices and processors. The most likely way of carrying out the invention will be simply by some form of computer program for such processors.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail.

## Claims

1. A method of controlling the number of calls transmitted by an originating exchange to a terminating exchange in a communications network when the network is subjected to randomly recurring call events which lead to unacceptable levels of ineffective traffic, the network having a plurality of subscribers, each having a unique subscriber identity and each being part of one of a plurality of demand areas comprising:
originating (107; 108) a monitor for each subscriber (11, 12, 13) within a demand area (50) when the level of ineffective traffic for the demand area (50) exceeds a preset demand area limit; and
initiating a traffic control response (110) for each subscriber (12) within the demand area (50) whose level of ineffective traffic exceeds a preset subscriber limit;
**characterised in that** the method further comprises
continuing the traffic control response until the level of ineffective traffic to that subscriber drops below its preset subscriber limit (111).

2. A method as claimed in claim 1 in which the preset demand area limit is set at a higher level of ineffective calls than is the preset subscriber limit.

3. A method as claimed in claim 1 or 2 in which the preset demand area limit is set as a percentage of the total traffic towards the demand area.

4. A method as claimed in claim 1 or 2 in which the preset set subscriber limit is set as a percentage of the traffic towards the subscriber.

5. A method as claimed in claim 1 or 2 in which at least one preset limit is set as a number of ineffective calls over a unit of time.

6. A method as claimed in any preceding claim in which at least one demand area is exempted from traffic control.

7. A method as claimed in any preceding claim in which at least one subscriber is exempted from traffic control.

8. A method as claimed in any preceding claim, in which:-
the monitor for each subscriber is carried out at the terminating exchange as is the traffic control response;
the intervening preceding transit exchange recognises the rejected call as an ineffective call; and
the originating exchange recognises the rejected calls at the transit exchange and the originating exchange carries out the traffic control response.

9. A method as claimed in any preceding claim in which when calls are transmitted through a transit exchange to the terminating exchange for the demand area the method comprises on the level of ineffective traffic for the demand area exceeding the preset demand area limit:-
the transit exchange originating the monitor for each subscriber within the demand area as if the transit exchange were the originating exchange;
the transit exchange originating the traffic control response on the specific subscriber as required;
the originating exchange sensing the traffic control response of the transit exchange;
the originating exchange causing the traffic control response for the specific subscriber to commence on itself; and
the transit exchange ceasing to cause a traffic control response on the level of ineffective traffic at the transit exchange reducing below the preset demand area limit.

10. A method as claimed in claim 9 in which when calls are transmitted through a plurality of transit exchanges the transit exchange directly connected to the terminating exchange first carries out the traffic control response which is sensed by the next transit exchange until finally the originating exchange starts the traffic control response.

11. A method as claimed in claim 9 or 10 in which when a transit exchange is not adapted to carry out the method, the method is carried out as if the transit exchange does not exist.

12. A method as claimed in any of claims 9 to 11 in which when the terminating exchange is not adapted to carry out the method, the method is carried out as if the terminating exchange did not exist, the next preceding exchange carrying out the method according to the invention.

13. A method as claimed in any preceding claim in which at least two demand areas are combined together to form an overall demand area and a preset overall demand area limit is set which limit is less than the aggregate of the limits for each individual demand area.

14. A method as claimed in any preceding claim, in which the traffic control response may be cancelled at the originating exchange.

15. A method as claimed in any preceding claim, in which each originating exchange downloads a report detailing each traffic control response to a separate management unit.

16. A method as claimed in any preceding claim, in which various exchanges in the network are allocated different preset demand area limits for the one demand area whereby the monitoring of the level of ineffective traffic for a demand area will initially occur at the exchange having the lower preset demand area limit allocated thereto.

17. A method as claimed in any of claims 1 to 15 in which the various exchanges in the network are allocated the same preset demand area limit for the one demand area.

18. A method as claimed in claims 1 to 15, in which different demand areas are allocated different demand area limits.

19. A communications network comprising:-
an originating exchange (1);
a terminating exchange (3);
a plurality of subscribers connected to the exchanges;
a plurality of demand areas (50, 51, 52, 53) including some of the subscribers;
means for measuring the ineffective traffic to a demand area;
means for determining if the ineffective traffic to a demand area (53) exceeds a preset demand area limit;
means for monitoring each subscriber (32, 33, 34) within the demand area (53) which exceeds the preset demand area limit;
means for identifying the particular subscriber (33) within the demand area (53) whose level of ineffective traffic exceeds a preset subscriber limit; and
means for causing the originating exchange (1) to perform traffic control on the particular subscriber (33)
**characterised in that**, the network further comprises:-
means for continuing the traffic control response until the level of ineffective traffic to that subscriber (33) drops below its preset subscriber limit.

20. A communications network as claimed in claim 19, in which there is a transit exchange and the transit exchange includes means for recognising that there is a number of ineffective calls.

## Patentansprüche

1. Verfahren zum Kontrollieren der Anzahl von Rufen, die durch eine Ursprungsvermittlungsstelle an eine Endvermittlungsstelle in einem Telekommunikationsnetz übermittelt werden, wenn das Netz regellos wiederkehrenden Rufereignissen ausgesetzt ist, welche zu unannehmbarem Niveaus von erfolglosem Verkehr führen, wobei das Netz eine Mehrzahl von Teilnehmern aufweist, die jeweils eine eindeutige Teilnehmerkennung haben und jeweils einem einer Mehrzahl von Bedarfsbereichen angehören, umfassend:
Erzeugen (107; 108) eines Überwachers für jeden Teilnehmer (11, 12, 13) innerhalb eines Bedarfsbereichs (50), wenn das Niveau von erfolglosem Verkehr für den Bedarfsbereich (50) eine voreingestellte Bedarfsbereichsgrenze überschreitet; und
Auslösen einer Verkehrskontrollantwort (110) für jeden Teilnehmer (12) innerhalb des Bedarfsbereichs (50), dessen Niveau von erfolglosem Verkehr eine voreingestellte Teilnehmergrenze überschreitet;
**dadurch gekennzeichnet, dass** das Verfahren ferner umfasst:
Fortsetzen der Verkehrskontrollantwort, bis das Niveau von erfolglosem Verkehr zu diesem Teilnehmer unter seine voreingestellte Teilnehmergrenze (111) fällt.

2. Verfahren nach Anspruch 1, wobei die voreingestellte Bedarfsbereichsgrenze auf ein höheres Niveau von erfolglosen Rufen als die voreingestellte Teilnehmergrenze festgelegt wird.

3. Verfahren nach Anspruch 1 oder 2, wobei die voreingestellte Bedarfsbereichsgrenze als ein Prozentsatz des Gesamtverkehrs in den Bedarfsbereich festgelegt wird.

4. Verfahren nach Anspruch 1 oder 2, wobei die voreingestellte festgelegte Teilnehmergrenze als ein Prozentsatz des Verkehrs zum Teilnehmer festgelegt wird.

5. Verfahren nach Anspruch 1 oder 2, wobei mindestens eine voreingestellte Grenze als eine Anzahl von Rufen über eine Einheit von Zeit festgelegt wird.

6. Verfahren nach einem der vorhergehenden Ansprüche, wobei mindestens ein Bedarfsbereich von der Verkehrskontrolle ausgenommen wird.

7. Verfahren nach einem der vorhergehenden Ansprüche, wobei mindestens ein Teilnehmer von der Verkehrskontrolle ausgenommen wird.

8. Verfahren nach einem der vorhergehenden Ansprüche, wobei:
der Überwacher für jeden Teilnehmer an der Endvermittlungsstelle ausgeführt wird, wie auch die Verkehrskontrollantwort;
die intervenierende vorhergehende Übergangsvermittlungsstelle den abgelehnten Ruf als einen erfolglosen Ruf erkennt; und
die Ursprungsvermittlungsstelle die abgelehnten Rufe an der Ubergangsvermittlungsstelle erkennt, und die Ursprungsvermittlungsstelle die Verkehrskontrollantwort ausführt.

9. Verfahren nach einem der vorhergehenden Ansprüche, wobei, wenn Rufe durch eine Übergangsvermittlungsstelle an die Endvermittlungsstelle für den Bedarfsbereich übermittelt werden, das Verfahren bei dem Niveau von erfolglosem Verkehr für den Bedarfsbereich, das die voreingestellte Bedarfsbereichsgrenze überschreitet, umfasst, dass:
die Übergangsvermittlungsstelle den Überwacher für jeden Teilnehmer innerhalb des Bedarfsbereichs erzeugt, als ob die Übergangsvermittlungsstelle die Ursprungsvermittlungsstelle wäre;
die Übergangsvermittlungsstelle die Verkehrskontrollantwort bei dem spezifischen Teilnehmer erzeugt, falls erforderlich;
die Ursprungsvermittlungsstelle die Verkehrskontrollantwort der Übergangsvermittlungsstelle erfasst;
die Ursprungsvermittlungsstelle bewirkt, dass die Verkehrskontrollantwort für den spezifischen Teilnehmer bei ihr selbst beginnt; und
die Übergangsvermittlungsstelle aufhört, eine Verkehrskontrollantwort bei dem Niveau von erfolglosem Verkehr an der Übergangsvermittlungsstelle auszulösen, das unter die voreingestellte Bedarfsbereichsgrenze sinkt.

10. Verfahren nach Anspruch 9, wobei, wenn Rufe durch eine Mehrzahl von Übergangsvermittlungsstellen übermittelt werden, die Übergangsvermittlungsstelle, die direkt mit der Endvermittlungsstelle verbunden ist, die Verkehrskontrollantwort, die durch die nächste Übergangsvermittlungsstelle erfasst wird, zuerst ausführt, bis schließlich die Ursprungsvermittlungsstelle mit der Verkehrskontrollantwort beginnt.

11. Verfahren nach Anspruch 9 oder 10, wobei, wenn eine Übergangsvermittlungsstelle nicht zum Ausführen des Verfahrens ausgelegt ist, das Verfahren so ausgeführt wird, als ob die Übergangsvermittlungsstelle nicht existieren würde.

12. Verfahren nach einem der Ansprüche 9 bis 11, wobei, wenn die Endvermittlungsstelle nicht zum Ausführen des Verfahrens ausgelegt ist, das Verfahren so ausgeführt wird, als ob die Endvermittlungsstelle nicht existieren würde, wobei die nächste vorhergehende Vermittlungsstelle das Verfahren gemäß der Erfindung ausführt.

13. Verfahren nach einem der vorhergehenden Ansprüche, wobei mindestens zwei Bedarfsbereiche miteinander kombiniert werden, um einen Gesamtbedarfsbereich zu bilden, und eine voreingestellte Gesamtbedarfsbereichsgrenze festgelegt wird, wobei diese Grenze niedriger als die Gesamtsumme der Grenzen für jeden einzelnen Bedarfsbereich ist.

14. Verfahren nach einem der vorhergehenden Ansprüche, wobei die Verkehrskontrollantwort an der Ursprungsvermittlungsstelle abgebrochen werden kann.

15. Verfahren nach einem der vorhergehenden Ansprüche, wobei jede Ursprungsvermittlungsstelle einen Bericht herunterlädt, der jede Verkehrskontrollantwort für eine getrennte Verwaltungseinheit detailliert.

16. Verfahren nach einem der vorhergehenden Ansprüche, wobei verschiedenen Vermittlungsstellen im Netz verschiedene voreingestellte Bedarfsbereichsgrenzen für den einen Bedarfsbereich zugewiesen werden, wobei die Überwachung des Niveaus von erfolglosem Verkehr für einen Bedarfsbereich anfänglich an der Vermittlungsstelle mit der ihr zugewiesenen niedrigsten voreingestellten Bedarfsbereichsgrenze erfolgt.

17. Verfahren nach einem der Ansprüche 1 bis 15, wobei den verschiedenen Vermittlungsstellen im Netz dieselbe voreingestellte Bedarfsbereichsgrenze für den einen Bedarfsbereich zugewiesen wird.

18. Verfahren nach einem der Ansprüche 1 bis 15, wobei verschiedenen Bedarfsbereichen verschiedene Bedarfsbereichsgrenzen zugewiesen werden.

19. Kommunikationsnetz, umfassend:
eine Ursprungsvermittlungsstelle (1);
eine Endvermittlungsstelle (3);
eine Mehrzahl von Teilnehmer, die mit den Vermittlungsstellen verbunden sind;
eine Mehrzahl von Bedarfsbereichen (50, 51, 52, 53), die einige der Teilnehmer umfassen;
Mittel zum Messen des erfolglosen Verkehrs in einen Bedarfsbereichs;
Mittel zum Bestimmten, ob der erfolglose Verkehr in einen Bedarfsbereich (53) eine voreingestellte Bedarfsbereichsgrenze überschreitet;
Mittel zum Überwachen jedes Teilnehmers (31, 32, 33) innerhalb des Bedarfsbereichs (53), welcher die voreingestellte Bedarfsbereichsgrenze überschreitet;
Mittel zum Identifizieren des jeweiligen Teilnehmers (33) innerhalb des Bedarfsbereichs (53), dessen Niveau von erfolglosem Verkehr eine voreingestellte Teilnehmergrenze überschreitet; und
Mittel zum Veranlassen der Ursprungsvermittlungsstelle (1), eine Verkehrskontrolle bei dem jeweiligen Teilnehmer (33) durchzuführen,
**dadurch gekennzeichnet, dass** das Netz ferner umfasst:
Mittel zum Fortsetzen der Verkehrskontrollantwort, bis das Niveau von erfolglosem Verkehr zu diesem Teilnehmer (33) unter seine voreingestellte Teilnehmergrenze fällt.

20. Kommunikationsnetz nach Anspruch 19, wobei eine Übergangsvermittlungsstelle vorhanden ist, und die Übergangsvermittlungsstelle Mittel zum Erkennen umfasst, dass es eine Anzahl von erfolglosen Rufen gibt.

## Revendications

1. Procédé de commande du nombre d'appels transmis par un commutateur d'origine vers un commutateur de destination dans un réseau de communications quand le réseau est sujet à des appels récurrents de manière aléatoire qui entraînent des niveaux inacceptable de trafic inutile, le réseau ayant une pluralité d'abonnés, ayant chacun une identité d'abonné unique et faisant chacun partie d'une pluralité de zones de demande comprenant les étapes consistant à :
émettre (107, 108) un moniteur pour chaque abonné (11, 12, 13) à l'intérieur d'une zone de demande (50) quand le niveau de trafic inutile pour la zone de demande (50) excède une limite de zone de demande prédéterminée ; et
amorcer une réponse de commande de trafic (110) pour chaque abonné (12) à l'intérieur de la zone de demande (50) dont le niveau de trafic inutile excède une limite d'abonnés prédéterminée :
**caractérisé en ce que** le procédé comprend en outre de :
poursuivre la réponse de commande de trafic jusqu'au niveau de trafic inutile auquel cet abonné baisse en dessous de sa limite d'abonné prédéterminée (111).

2. Procédé selon la revendication 1, dans lequel la limite de zone de demande prédéterminée est déterminée à un niveau plus élevé d'appels inefficaces que l'est la limite d'abonnés prédéterminée.

3. Procédé selon la revendication 1 ou 2, dans lequel à limite de zone de demande prédéterminée est déterminée comme un pourcentage du trafic total vers la zone de demande.

4. Procédé selon la revendication 1 ou 2, dans lequel la limite d'abonné réglée prédéterminée est réglée comme un pourcentage du trafic vers l'abonné.

5. Procédé selon la revendication 1 ou 2, dans lequel au une limite prédéterminée est déterminée comme un nombre d'appels inutiles sur une unité de temps.

6. Procédé selon une quelconque des revendications précédentes, dans lequel au moins une zone de demande est exemptée de la commande de trafic.

7. Procédé selon une quelconque des revendications précédentes, dans lequel au moins un abonné est exempté de la commande de trafic.

8. Procédé selon une quelconque des revendications précédentes, dans lequel :
le moniteur de chaque abonné est mis en oeuvre au niveau du commutateur de destination comme l'est la réponse de commande de trafic ;
le commutateur de transit précèdent intervenant reconnaît l'appel rejeté comme un appel inutile ; et
le commutation d'origine reconnaît les appels rejetés au niveau du commutateur de transit et le commutateur d'origine effectue la réponse de commande de trafic.

9. Procédé selon une quelconque des revendications précédentes quand des appels sont transmis via un commutateur de transit vers le commutateur de destinations de la zone de demande le procédé comprend sur le niveau de trafic inutile de la zone de demande excédant la limite de zone de demande prédéterminée :
le commutateur de transit émettant le moniteur pour chaque abonné à l'intérieur de la zone de demande comme si le commutateur de transit était le commutateur de destination ;
le commutateur de transit émettant la réponse de commande de trafic sur l'abonné spécifique comme requis ;
le commutateur d'origine détectant la réponse de commande de trafic du commutateur de transit ;
le commutateur d'origine amenant la réponse de commande de trafic de l'abonné spécifique à commencer d'elle-même ; et
le commutation de trafic cessant d'amener une réponse de commande de trafic sur le niveau de trafic inutile au niveau du commutateur de transit, à diminuer au dessous de la limite de zone de demande prédéterminée.

10. Procédé selon la revendication 9, dans lequel quand des appels sont transmis via une pluralité de commutateurs de transit, le commutateur de transit directement connecté au commutateur de destination effectue d'abord la réponse de commande de trafic qui est détectée par le commutateur de transit suivant jusqu'à ce que finalement le commutateur d'origine commence la réponse de commande de trafic.

11. Procédé selon la revendication 9 ou 10, dans lequel quand un commutateur de transit n'est pas adapté pour mettre en oeuvre le procédé, le procédé est mis en oeuvre comme si le commutateur de transit n'existait pas.

12. Procédé selon une quelconque des revendications 9 à 11, dans lequel quand le commutateur de destination n'est pas adapté pour mettre en oeuvre le procédé, le procédé est mis en oeuvre comme si le commutateur de destination n'existait pas, le commutateur précèdent suivant mettant en oeuvre le procédé selon l'invention.

13. Procédé selon une quelconque des revendications précédentes, dans lequel au moins deux zones de demande sont combinées pour former une zone de demande globale et une limite de zone de demande globale prédéterminée est réglée, laquelle limite est inférieure à l'agrégation, des limites de chaque zone de demande individuelle.

14. Procédé selon une quelconque des revendications précédents, dans lequel la réponse de commande de trafic peut être annulée au niveau du commutateur d'origine.

15. Procédé selon une quelconque des revendications précédentes, dans lequel chaque commutateur d'origine télécharge un rapport détaillant chaque réponse de commande de trafic sur une unité de gestion séparée.

16. Procédé selon une quelconque des revendications précédentes, dans lequel divers commutateurs dans le réseau se voient allouer des limites de zone de demande prédéterminées différentes pour une zone de demande, moyennant quoi la surveillance du niveau de trafic inutile d'une zone de demande surviendra initialement au niveau du commutateur auquel est allouée la limite de zone de demande prédéterminée plus basse.

17. Procédé selon une quelconque des revendications 1 à 15. dans lequel les divers commutateurs dans le réseau se voient allouer la même limite de zone de demande prédéterminée pour à zone de demande.

18. Procédé selon les revendications 1 à 15, dans lequel des zones de demande différentes se voient allouer des limites de zone de demande différentes.

19. Réseau de communication comprenant :
un commutateur d'origine (1),
un commutateur de destination (3),
une pluralité d'abonné connectés aux commutateurs,
une pluralité de zones de demande (50, 51, 52, 53) incluant certains des abonnés,
un moyen pour mesurer le trafic inutile sur une zone de demande,
un moyen pour déterminer si le trafic inutile sur une zone de demande (53) excède une limite de zone de demande prédéterminée,
un moyen pour surveiller chaque abonné (32, 33, 34) à l'intérieur de la zone de demande (53) qui excède la limite de zone de demande prédéterminée,
un moyen pour identifier l'abonné particulier (33) à l'intérieur de la zone de demande (53) dont le niveau de trafic inutile excède une limite d'abonné prédéterminée ; et
un moyen pour amener le commutateur d'origine (1) à effectuer une commande de trafic sur l'abonné particulier (33),
**caractérisé en ce que** le procédé comprend en outre
un moyen pour poursuivre la réponse de commande de trafic jusqu'à ce que le niveau de trafic inutile de cette abonné (33) baisse en dessous de sa limite d'abonné prédéterminée.

20. Réseau de communication selon la revendication 19, dans lequel il y a un commutateur de transit et le commutateur de transit inclut un moyen pour reconnaître qu'il y a un nombre d'appels inutiles.
